# EUROPEAN PATENT SPECIFICATION

(11) **EP 2 355 952 B1**
(45) Date of publication and mention of the grant of the patent: **02.01.2013**
(21) Application number: 09764760.6
(22) Date of filing: 10.11.2009
(51) Int. Cl.: B23K 26/08, B23K 26/26, B23K 26/38, B23K 101/16

(54) **WELDING SYSTEM OF METAL STRIPS AND WELDING PROCESS THEREOF**
SYSTEM ZUM SCHWEISSEN VON BLECHSTREIFEN UND SCHWEISSVERFAHREN VON BLECHSTREIFEN
SYSTÈME DE SOUDAGE DE BANDES MÉTALLIQUES ET LEUR PROCÉDÉ DE SOUDAGE

(30) Priority: 10.11.2008 IT MI20081977
(43) Date of publication of application: 17.08.2011
(73) Proprietor: DANIELI & C. OFFICINE MECCANICHE S.p.A., 33042 Buttrio (UD) (IT)
(72) Inventor: VIGNOLO, Luciano, I-33100 Udine (IT); PETTARIN, Siro, I-34072 Gradisca D'isonzo (IT)
(74) Representative: Cinquantini, Bruno
(86) International application number: PCT/EP2009/064924
(87) International publication number: WO 2010/052339

(56) References cited:
- JP-A- 11 285 876
- JP-A- 2003 230 972
- JP-A- 2007 313 511
- US-A1- 2002 043 092

## Description

### Field of the invention

The present invention relates to a welding system of metal strips according to the preamble of claim 1, and to a welding process according to the preamble of claim 12, in particular for use in metal strip production systems or on different treatment lines of said strips.

### State of the art

On treatment lines for cold production of bare and/or coated strips, the strip must pass through seamlessly in order to avoid reject strips from being produced, upon stopping the strip in the treatment section.

The sequences of a process for joining two successive strips along a treatment line, hereinafter named "welding process" (as the use of mechanical clinching machines is restricted to a few applications, mainly for painting lines) are:
- passing the tail of a first strip;
- cutting the joint edge for the tail of the first strip to prepare it;
- clamping the tail by means of vices;
- feeding the head of a second strip;
- cutting the joint edge for the head of the second strip for preparing it;
- clamping the head by means of vices;
- approaching the two rims or edges to be welded;
- welding said edges;
- punching for recognizing the welding passage;
- opening the vices;
- transferring the welded joint to the side notcher;
- side notching the welded joint;
- applying traction to the welded strip and starting a new welding cycle.

The step of cutting for preparing the edges to be welded is carried out by means of mechanical shears. Due to the cutting and tearing process of mechanical shears, the cut part has geometric anomalies, such as burring and deviation from perpendicular, and the possible bending of the cut end.

These aspects negatively affect the quality of the welded joint and jeopardize the grip during the passing and treatment on processing and rolling lines.

The joint must allow to safely pass through the treatment line because in case of breakage, in addition to the rejection of the material present in the processing section, there are problems related to system functionality preservation and implications on safety for system operators may occur.

Furthermore, the breakage of the welded joint stops the production activity for the time needed to restore running conditions, thus generating a considerable economic damage for the production system manager.

The welding/jointing process must also be flexible to allow strips of different thickness and width to be connected. The time of manufacturing the joint is very important because, in order to prevent the process from stopping, buffer systems are arranged between the input section (where the strips are connected) and the process. The size of these buffer systems and the corresponding investment cost are related to the process speed and to the dead time occurring in the input section.

For these reasons, avoiding to rework joints is very important because, in addition to being indicative of a poor welding system, this slows down the production and implies higher manufacturing costs.

For welded strips of different width, in order to prevent catching while passing along the treatment line, especially when passing from a narrow strip portion to a wide strip portion, a gradual joint is created between the two welded portions of the strip using an appropriate cutting machine, known as side notcher or edge trimming machine.

Strip welding, namely the welding of the tail of a previous coil to the head of a next coil, is carried out by means of various processes such as:
- resistance welding with welding wheels;
- welding with MIG/TIG welding torches;
- laser welding.

The latter process has been developed over the past twenty years and replaced the other joining processes, because it is a reliable process which is not very influenced by the negative effects related to the chemistry of the steel strips to be welded.

Welding machines include a centering and guiding system for the input strip, input head clamping vices, output tail clamping vices, a centering and guiding system for the output strip, a mechanical cutting system for cutting strip head and tail, a welding system.

The welding system may be implemented by using the various processes described above. A laser welding system is considered below.

In the first laser welding process applications, the laser welding machines was installed aboard resistance welding machines. The laser head moved along a y axis transversal to the travel direction x of the strip and possibly along the z axis, vertical and orthogonal to the pass line.

A welding machine of such a type is described in patent JP11285876. A criticality of such a solution is related to the mechanical cutting process which, due to its nature, cannot supply rims free from geometric defects, such as burring or deviations from perpendicular.

Technologies for using the laser also for cutting and preparing the edges to be welded were later developed. The technological development led to make combined machines capable of both cutting and welding processes with appropriate lenses. Perfectly regular rims without geometry defects may be obtained by means of an appropriately controlled laser cutting.

Machines capable of combining both rim cutting and welding thereof using a laser have been designed for the implementation of welding machines for steel strip processing line, as described in patent JP20077313511. Both the cutting head and the welding head move along the y axis, transversal to the travel direction x of the strip, and along the z axis, vertical and orthogonal to the pass line.

Using these machines disadvantageously implies the need to continue to use mechanical edge-trimming systems for the welding edges, with evident burden of time and investment costs.

It is thus felt the need to make a welding system for metal strips which allows to overcome the aforesaid drawbacks.

### Summary of the invention

It is a primary object of the present invention to provide a welding system for metal strips which comprises a laser welding and cutting system capable of moving on three axes x, y and z and carrying out not only cutting operations for preparing the edges and welding operations, but even the operations of side notching or edge-trimming of the welded joint, without the need for specific mechanical systems, with considerable saving of investment times and costs.

Another object of the invention is to provide a flexible system capable of covering a wide range of products in terms of size and chemical-physical features.

A further object of the present invention is to provide a corresponding welding process which is rapid and accurate at the same time, thus reducing production costs while ensuring a high strip welding quality.

The present invention thus proposes to achieve the above-discussed objects by providing a welding system of metal strips along a feeding plane of said strips, according to claim 1.

The laser head is advantageously mounted on one arm of said robot, suitable for translating along said longitudinal axis X, along a first axis Y orthogonal to the longitudinal axis and lying on said feeding plane, and along a second axis Z orthogonal to the longitudinal axis and to the feeding plane. The first positioning means comprise a first couple of motorized rolls, first centering guides and first clamping means of the tail of the first strip. Similarly, the second positioning means comprise a second couple of motorized rolls, second centering guides and second clamping means of the head of the second strip.

Detecting means for detecting the position of the horizontal symmetry plane of the tail of the first strip and of the head of the second strip, respectively, with respect to the feeding plane, and for detecting the position of the vertical symmetry plane of the tail of the first strip and of the head of the second strip, respectively, are advantageously included.

A further advantage is that moving means for moving the first and/or second clamping means are provided, controlled by said detecting means, adapted to allow a translation of said clamping means along said first axis Y to align the vertical symmetry planes of the first and second strips and/or to allow a translation of said clamping means along the second axis Z to align the horizontal symmetry planes of the first and second strips with said feeding plane. Said moving means can translate the first and/or second clamping means along the longitudinal axis X for suitably spacing the tail of the first strip and the head of the second strip in relation to predetermined welding parameters.

A second aspect of the present invention relates to a welding process of metal strips along a feeding plane of said strips, defining a longitudinal axis X, which may be carried out by the aforementioned welding system, said process comprising the following steps according to claim12:
- positioning the tail of a first strip at a first cutting position along said feeding plane by means of first positioning means;
- positioning the head of a second strip at said first cutting position by means of second positioning means;
- cutting a tail portion of the first strip and a head portion of the second strip at said first cutting position by means of a laser head of an operating machine;
- welding the tail of the first strip to the head of the second strip at said first cutting position by means of said laser head in order to obtain a welded strip;
- feeding the welded strip so that the connection area of said welded strip moves from said first cutting position to a second cutting position along said feeding plane;
- translating the laser head along said longitudinal axis from said first cutting position to said second cutting position;
- side notching the welded strip at the ends of the connection area by means of the laser head in said second cutting position.

The following steps may be advantageously provided before the step of welding:
- detecting the position of the horizontal symmetry plane of the tail of the first strip and of the head of the second strip, respectively, with respect to the feeding plane, and detecting the position of the vertical symmetry plane of the tail of the first strip and of the head of the second strip, respectively, by means of said detecting means;
- moving the first and/or second clamping means of the tail of the first strip and of the head of the second strip, respectively, by means of said moving means controlled by the detecting means so as to translate said clamping means along the first axis Y to align the vertical symmetry planes of the first and second strips and/or so as to translate said clamping means along the second axis Z to align the horizontal symmetry planes of the first and second strips with said feeding plane;
- translating first and/or second clamping means along the longitudinal axis X by means of said moving means for suitably spacing the tail of the first strip and the head of the second strip in relation to predetermined welding parameters.

The system of the invention, by using a laser device mounted on a linear robot capable of moving on three axes x, y and z with a wide moving range and exploiting the potentials of laser to the maximum, advantageously allows to eliminate the mechanical side notcher or edge-trimming machine from the line, thus obtaining also a considerable benefit in terms of investment costs.

The system and method of the present invention further advantageously includes:
- the use of a combined laser cutting and welding head;
- the use of a linear robot with a wide travel range on three axes x, y and z, to which the aforesaid cutting and welding head is mounted;
- the necessary mechanical equipment for centering, guiding and clamping the head and tail of the strips.

The travel of the cutting and welding laser head along the x and y axes is of the order of some meters. The laser head with numeric controller is capable of advantageously making complex profiles by following polynomial, circular, elliptical or trigonomic paths or curves resulting from the combination of said paths or functions, and not only linear cuts and welds.

The system of the invention advantageously forms an integrated system where each component contributes to reliably join a sequence of strips.

A further advantage is that automation means are provided, which allow to synchronously control each piece of equipment of the welding system. These automation means also provide for controlling welded joint quality by monitoring some cutting and welding process parameters, in addition to a possible automatic inspection of the dimensions of the joint.

The welding system and process, objects of the present invention, meets the current needs in terms of:
- reliability;
- quality of the joint;
- cost-effectiveness in terms of investment and management;
- flexibility;
- running speed.

The solution of the invention may be applied to all process lines, such as pickling lines, continuous roll mills, hot galvanizing lines, electric galvanizing lines, continuous annealing lines, tin plating lines, pre-painting lines and lines for treating stainless steel and silica steel strips preferably ranging from 0.15 to 7 mm in thickness and from 500 to 2300 mm in width.

The dependent claims describe preferred embodiments of the invention.

### Brief description of the drawings

Further features and advantages of the invention will be more apparent in the light of the detailed description of a preferred, but not exclusive, embodiment of a welding system shown by way of non-limitative example, with the aid of the accompanying drawings, in which:
Fig. 1 a is a diagrammatic perspective view of a typical layout of a laser welding system according to the state of the art;
Fig. 1b is a plan view of the layout in Fig. 1 a;
Figures 2, 3 and 4 show a mechanical cutting sequence of the semicircles on the edges of the welded joint by means of the system in Fig. 1 a;
Fig. 5a shows a diagrammatic side view of a layout of a welding system according to the present invention;
Fig. 5b is a plan view of the layout in Fig. 5a;
Figures from 6 to 11 show a laser cutting and welding sequence according to the present invention;
Figures 12 and 13 show a cutting sequence of semicircles on the edges of the welded joint by means of the system according to the invention;
Fig. 14 is a diagram of the cutting and welding paths of the invention.

### Detailed description of a preferred embodiment of the invention

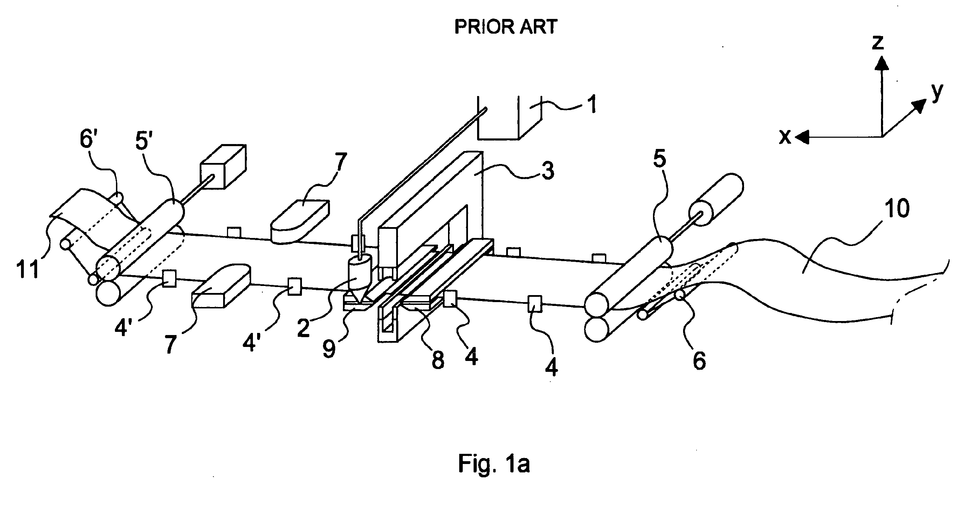

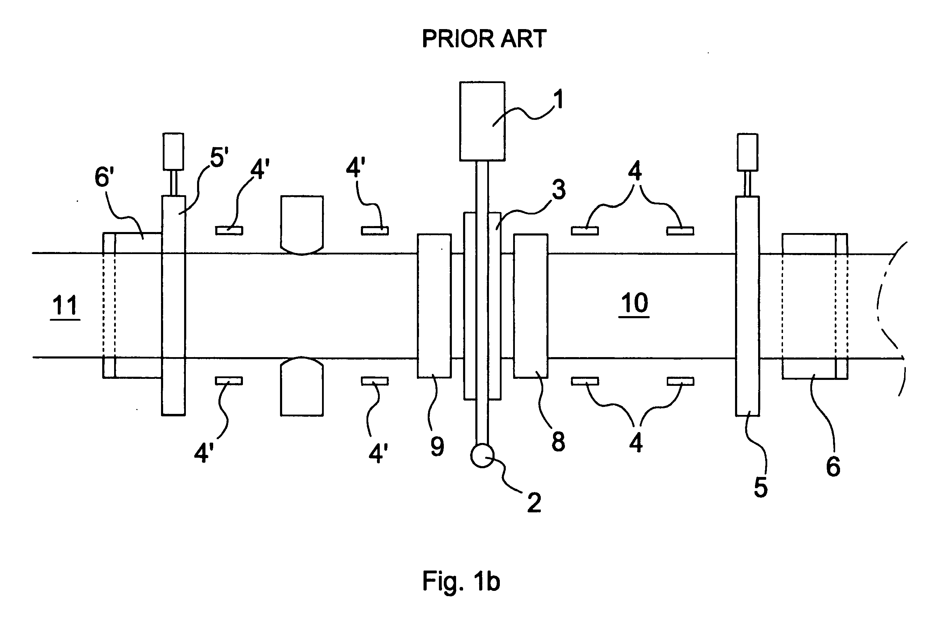

Figures 1 a and 1 b show a system for welding metal strips used in treatment lines of said strips or in production systems thereof, belonging to the state of the art. Such a welding system comprises:
- a C-shaped structure 3, arranged transversally to the feeding direction of the strips and provided on the inner side of the C with shears for cutting the ends of the two strips, i.e. the tail of a first strip 11 and the head of a second strip 10;
- a laser source 1 provided with a laser welding head 2 or welding head, integral with the structure 3 and mobile along direction y of the width of the strips;
- centering guides 4, 4' of the head of the second strip 10 and of the tail of the first strip 11;
- couples of gripping rolls 5, 5' for feeding heads and tail of the second and first strips, respectively, into the welding system;
- loop or band generators 6, 6' arranged close to said couples of gripping rolls 5, 5';
- a vice 9 for gripping the end of the tail of the first strip 11;
- a vice 8 for gripping the end of the head of the second strip 10;
- a mechanical side notcher or edge-trimming device 7, arranged in the output direction of the so-called welded strip obtained by welding the first and second strips.

The tail of the first strip 11, e.g. wound on a coil on a winder, is fed with the aid of a first couple of gripping rolls 5', named output rolls 5' of said welded strip, under the output vice 9. In the meantime, the band or loop generator 6' moves up, the tail of the first strip 11 is guided by the output centering guides 4', and the output vice 9 is clamped to block the tail of the strip 11.

The welding sequence proceeds by feeding the head of the second strip 10, e.g. wound on a coil onto a further winder. The head of the strip 10 is fed with the aid of a second couple of gripping rollers 5, named input rollers 5 of said welded strip, under the input vice 8. In the meantime, the band or loop generator 6 moves up, the head of the strip is guided with the aid of the input centering guides 4, and the input vice 8 is clamped to block the head of the strip 10.

The shear contained in the C-shaped structure 3 moves down and cuts off the protruding crop ends from the head and tail of the two strips. The mobile output vice 9, or conversely the mobile input vice 9, moves together the two rims or edges to be welded to a predetermined optimal position.

The conclusion of this operation for moving the two rims together is the end of the rim preparation sequences. From this moment, the step of welding itself starts. The welding head 2, integral with the C-shaped structure 3, moves transversally to the strip; a laser beam is emitted by the source 1 and the welding head 2 welds the rims of the two strips to form the so-called welded strip.

The speed of the welding head and the intensity of the laser beam are defined and controlled in relation to the geometric and chemical-physical parameters of the steel to be welded.

A flattening wheel assembly which follows the head 2 may be provided in combination with the welding head 2 to flatten out the welding joint.

After completing the welding, the input and output bands or loops are recovered by lowering the loop generators 6', 6; the strip is pulled and the welded joint 12 moves in a coordinated manner to reach a position close to the side notcher or edge-trimming device 7.

Figures from 2 to 4 show in sequence the operations needed to obtain the simultaneous cut of two semicircles on the welded strip, the semicircles being made at the welding joint 12.

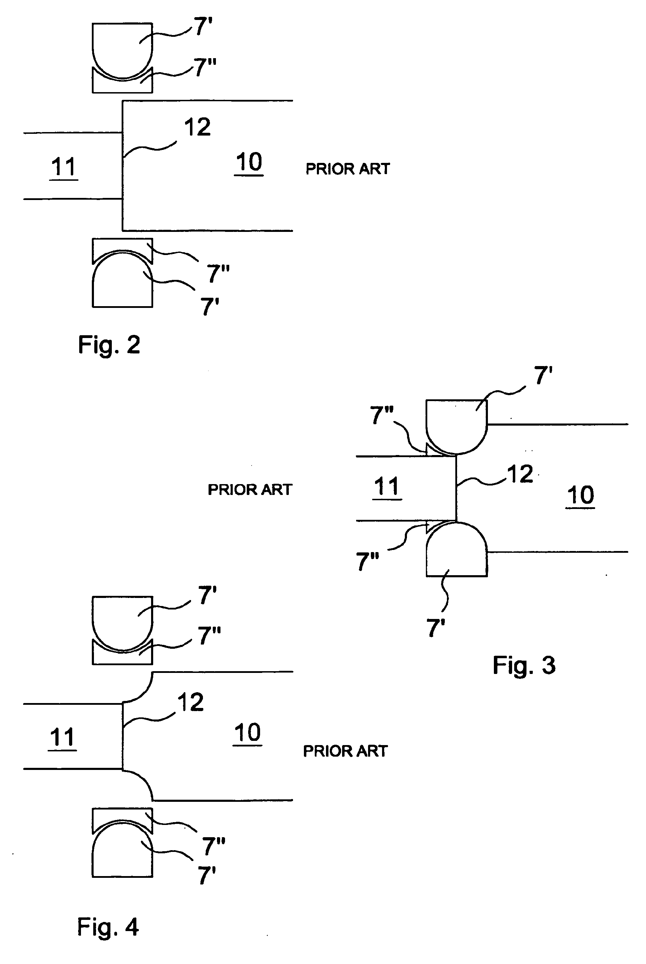

Fig. 2 shows the welding joint 12 between the first strip 11 and the second strip 10, narrower than the first strip, placed at the side notcher comprising a couple of notching elements, each provided with an upper blade 7' and a lower blade 7".

Fig. 3 shows the notching elements in the cutting position after approaching the feeding axis x of the welded strip so as to obtain the cutting of the semicircle on the second strip 10 in order to join the two welded strip portions of different width, as shown in Fig. 4.

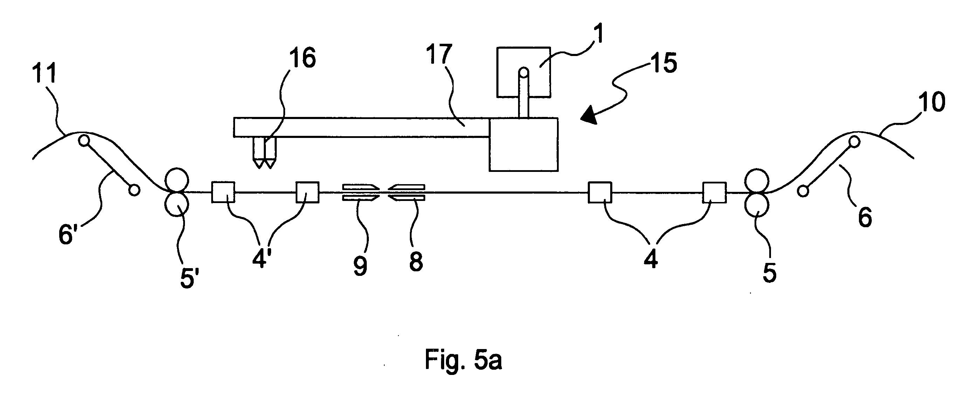

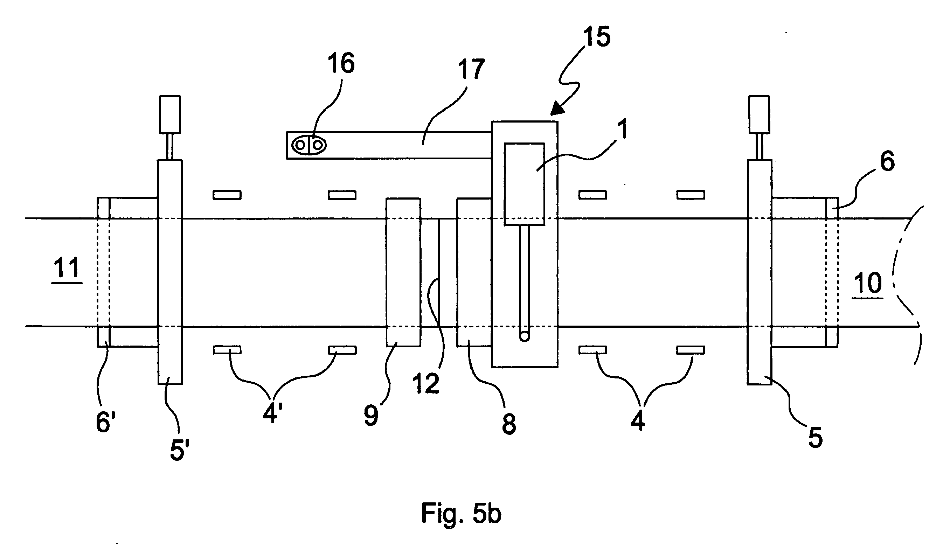

Figures 5a and 5b show a novel system for welding metal strips used in treatment lines of said strips or in production systems thereof, according to the present invention.

Such a welding system comprises the same components as the welding system in Fig. 1a, indicated by the same reference numbers, except for the C-shaped structure 3 and the mechanical side notcher 7.

The welding system of the invention is advantageously provided with a linear robot 15 with a wide travel range on three axes x, y and z. A cutting and welding laser head 16 is mounted to said linear robot, i.e. a combined laser head suitable both for cutting the head and tail of the strips for preparing the edges or rims to be welded, and for laser welding said rims, and for side notching or edge-trimming the so-called welded strip. The laser head 16 may comprise a supply laser source or may be supplied by a separate laser source 1, integral with the body of the linear robot 15, as shown in figures 5a and 5b.

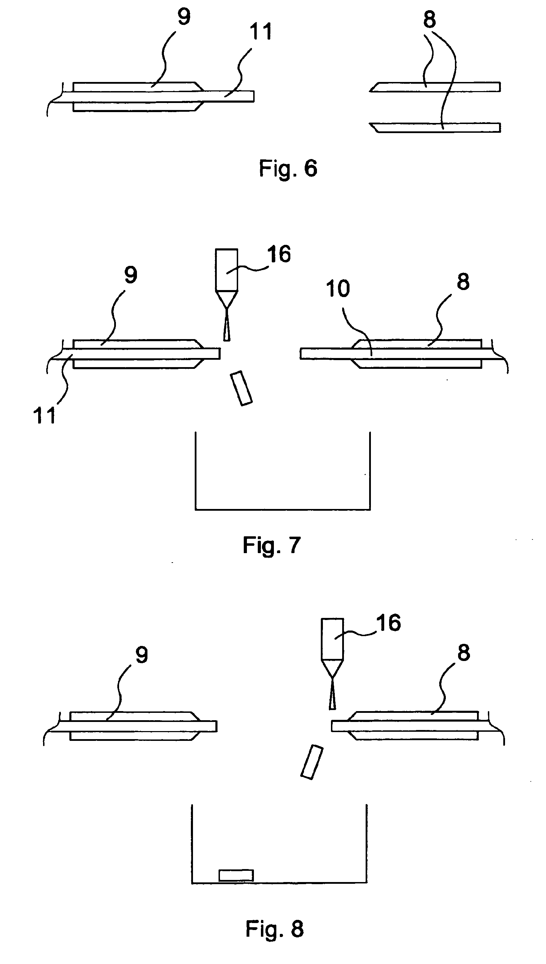

The tail of the first strip 11, e.g. wound on a coil on a winder or fed along axis X, is fed with the aid of a first couple of motorized gripping rolls 5', named output rolls 5' of said welded strip, under the output vice 9. In the meantime, the band or loop generator 6' moves up, the tail of the first strip 11 is guided by the output centering guides 4', and the output vice 9 is clamped to block the tail of the strip 11 (Fig. 6). At this point the laser head 16, appropriately fed, starts cutting the tail crop end of the first strip 11, as shown in Fig. 7. At the same time, the feeding cycle of the head of the second strip 10 proceeds, as shown below, said second strip 10 being for example wound on a coil on a further winder or being fed along the axis X. The head of the strip 10 is fed with the aid of a second couple of motorized gripping rollers 5, named input rollers 5 of said welded strip, under the input vice 8. In the meantime, the band or loop generator 6 moves up, the head of the strip 10 is guided with the aid of the input centering guides 4, the input vice 8 is clamped to block the head of the strip 10 (Fig. 7).

Before welding the strips 10 and 11, the position of the horizontal symmetry planes of each strip 10, 11 is advantageously detected, i.e. the position of the middle line planes of the thickness of said strips, and the possible deviation with respect to the feeding plane of the strips is determined. The position of the vertical symmetry planes of each strip 10, 11 may also advantageously be detected.

For this purpose, there are provided detecting means for detecting the position of the horizontal symmetry planes of each strip 10, 11, and for detecting their deviation from the feeding plane of the strips and the position of the vertical symmetry planes of each strip 10, 11.

Said detecting means send a control signal to the moving means of output vice 9 and/or input vice 8 which allow their translation both along axis y to align the vertical symmetry planes of the strips, and along axis z to align the horizontal symmetry planes of the strips to one another and to said feeding plane.

The detecting means comprise, for example, photocells to detect the exact position of the head and tail of the strips.

The moving means of the vices comprise, for example, position-controlled hydraulic cylinders or electromechanical jacks provided with position transducer.

Once the head of the strip 10 has been blocked by clamping the input vice 8, the arm of the linear robot 15 slightly moves along axis x so as to take the laser head 16 to the predetermined position for cutting the head crop end of the second strip 10, as shown in Fig. 8.

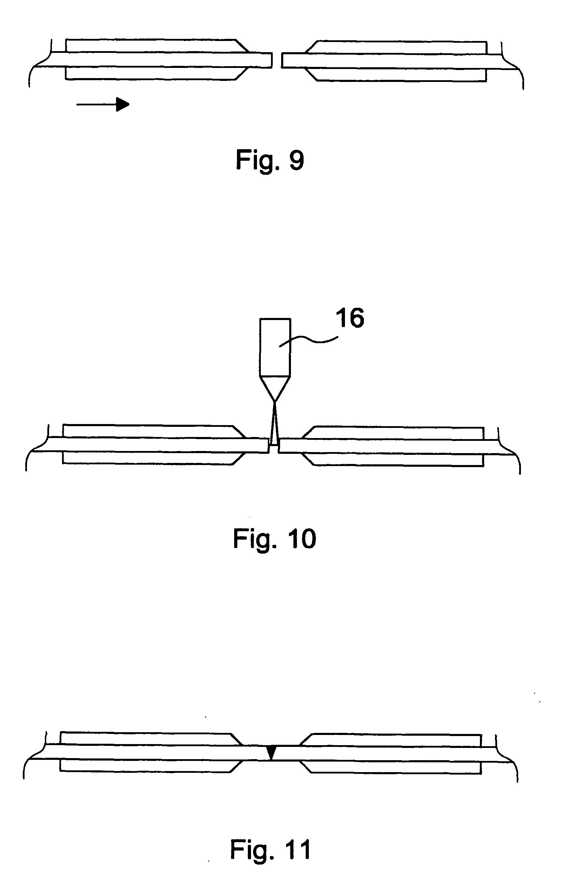

Upon completion of this step of cutting the crop ends or portions of tail and head, the mobile input vice 8 and/or the mobile output vice 9 can translate along the axis x, by means of said moving means, to appropriately space apart the two rims of the head of the strip 10 and of the tail of the strip 11 in relation to predetermined welding parameters (Fig. 9).

The arm 17 of the linear robot 15 slightly moves along axis x so as to take the laser head 16 to the predetermined position for welding the two rims as shown in Fig. 10. At this point, the arm 17 of the linear robot 15 moves along axis y, transversally to axis x, so that the laser head 16 can weld the two rims by means of a laser beam emitted by the source 1, to form the so-called welded strip. A couple of flattening rolls (not shown) may be included, which integrally move with the laser head 16, suitable to laminate the newly formed welding joint 12.

The speed of the welding head and the intensity of the laser beam are defined and controlled in relation to the geometric and chemical-physical parameters of the steel to be welded.

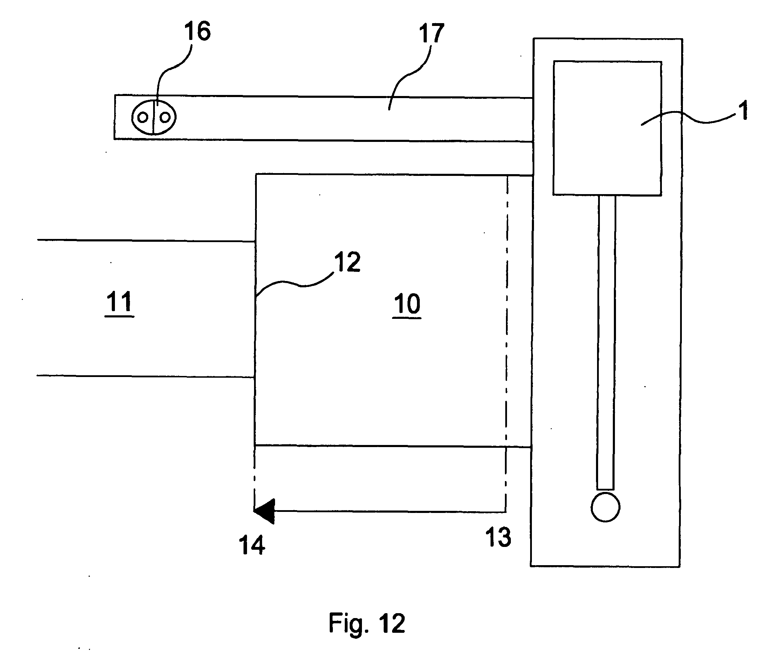

Upon completion of the welding (Fig. 11), the input and output bands are recovered by lowering the loop generators 6', 6, the welded strip is pulled and the welded joint 12 moves in a coordinated manner from a welding position 13 to the side notching position 14, shown in Fig. 12.

The cutting/welding laser head 16 is advantageously positioned by means of the arm 17 of the linear robot 15 at the position 14 and, moving according to a fixed path, forms a first semicircle by cutting the material by means of a predetermined laser beam close to a first end of the welding joint 12. Once the cutting of the first semicircle has been completed, the laser head 16 is translated along axis y so as to be able to form a second semicircle by cutting the material by means of said predetermined laser beam close to a second end of the welding joint 12, according to a predetermined path.

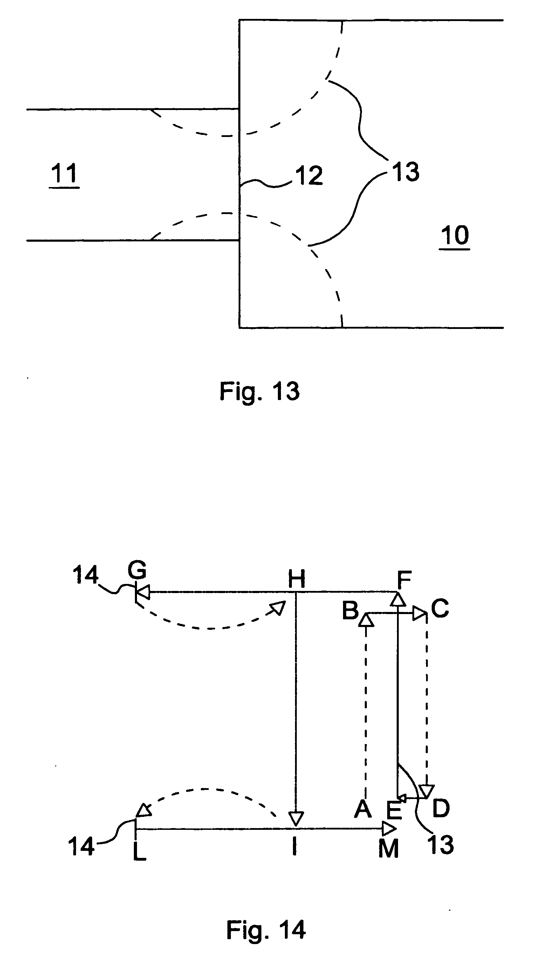

In Fig. 13, a dashed line shows an example of path followed by the laser head 6 to obtain the cutting of the semicircles at the end of the welding joint 12.

Assuming that the welding occurs by moving the laser head 16 from operator side to motor side, the cutting of the semicircles will start from the motor side.

With this regard, Fig. 14 shows the paths along axis x and axis y followed by the laser head 16, moved by means of the arm 17 of the linear robot 15, to carry out the cutting operations for preparing the edges to be welded, the welding operation of said edges and the cutting operations for obtaining the semicircles or joints between welded portions of strips having either different or equal width.

Fig. 14 shows cutting and welding paths which advantageously optimize machine time and are a major aspect of the process according to the invention.

In particular, during an operating cycle of the welding process of the invention, the cutting/welding laser head 16 covers:
- the segment AB along axis y to cut the tail crop end of the first strip 11;
- the segment BC along axis x to reach the cutting position of the head crop end of the second strip 10;
- the segment CD along axis y to cut the head crop end of the second strip 10;
- possibly the segment DE along axis x to reach welding position of the rims of strips 11 and 10 (unnecessary movement if segment CD also corresponds to the welding position);
- the segment EF along axis y to weld the rims of the strips 11 and 10;
- the segment FG along axis x to reach the cutting position for making a first side notching or semicircle at a first end of the welding joint 12, which in the meantime has been fed from position 13 (EF) to position 14 (GL);
- the curvilinear path GH to carry out the cutting of said first side notching or semicircle;
- the segment HI along axis y to reach the cutting position for making a second side notching or semicircle at a second end of the welding joint 12;
- the curvilinear path IL to carry out the cutting of said second side notching or semicircle;
- the segment LM along axis x to reach a position at the cutting position of a tail crop end of a next first strip 11;
- a possible segment MA along axis y to reach said cutting position of the new tail crop end.

Control means for controlling the movement of the cutting and welding head are advantageously provided, which optimize the time of the aforesaid operating cycle. These control means may comprise, for example, encoders directly connected to the electric motors which control the movement of the arm 17 of robot 15 on three axes x, y and z.

The laser cutting head may also be used for either continuously or discontinuously trimming the edges or rims, or for eliminating possible faults from the edge. It may also be used to make the hole indicating the welding joint 12, useful for following the passing of joint 12 through the whole treatment line.

The joining semicircles, made for strips of equal or different width, are curvilinear and may be made as a combination of curves having a degree from 2 to 13. A semicircle may be a circumference portion with radius from 150 to 7000 mm.

## Claims

1. Welding system of metal strips along a feeding plane of said strips defining a longitudinal axis (X), comprising:
- an operating machine (15) provided with a laser head (16) configured to carry out, in a first cutting position (13), both cutting operations for cutting a tail portion of a first strip (11) and a head portion of a second strip (10), and welding operations to weld tail of the first strip (11) and head of the second strip (10), thus obtaining a welded strip,
- first positioning means (5', 4', 9) configured to position the tall of the first strip (11) at a first cutting position along said feeding plane;
- second positioning means (5, 4, 8) configured to position the head of the second strip (10) at said first cutting position,
**characterised in that** said operating machine is a robot (15) configured to translate said laser head (16) from said first cutting position to a second cutting position (14) along said longitudinal axis (X) to carry out a side notching by said laser head (16) at the connection area (12) of the welded strip when said welded strip reaches said second cutting position.

2. Welding system according to Claim 1, wherein said laser head (16) is mounted on an arm (17) of said robot (15), able to translate along the longitudinal axis (X), along a first axis (Y) orthogonal to the longitudinal axis (X) and lying on said feeding plane, and along a second axis (Z) orthogonal to the longitudinal axis (X) and to the feeding plane.

3. Welding system according to Claim 2, wherein there are provided detecting means for detecting the position of the horizontal symmetry plane, respectively, of the tail of the first strip (11) and of the head of the second strip (10) with respect to the feeding plane, and for detecting the position of the vertical symmetry plane, respectively, of the tail of the first strip (11) and of the head of the second strip (10).

4. Welding system according to Claim 3, wherein said first positioning means (5', 4', 9) comprise a first couple of motorized rolls (5'), first centering guides (4') and first clamping means (9) of the tail of the first strip (11).

5. Welding system according to claim 4, wherein said second positioning means (5, 4, 8) comprise a second couple of motorized rolls (5), second centering guides (4) and second clamping means (8) of the head of the second strip (10).

6. Welding system according to claim 5, wherein moving means for moving the first and/or second clamping means (9, 8) are provided, controlled by said detecting means and adapted to allow a translation of said clamping means along the first axis (Y) to align the vertical symmetry planes of the first (11) and the second strip (10) and/or to allow a translation of said clamping means along the second axis (Z) to align the horizontal symmetry planes of the first (11) and the second strip (10) with said feeding plane.

7. Welding system according to claim 6, wherein said moving means can translate the first (9) and/or second clamping means (8) along the longitudinal axis (X) for suitably spacing the tail of the first strip (11) and the head of the second strip (10) with respect to predetermined welding parameters.

8. Welding system according to any one of the preceding claims, wherein loop generators (6, 6') are provided for respectively raising the first (11) and the second strip (10) with respect to said feeding plane in the positioning step of said head and said tail of strips in the first cutting position.

9. Welding system according to any one of the preceding claims, wherein a couple of flattening rolls is provided, which are integrally movable with the laser head (16), adapted to laminate the connection area (12) of the welded strip.

10. Welding system according to any one of the preceding claims, wherein controlling means for controlling the movement of the laser head (16) are provided.

11. Welding system according to claim 10, wherein said controlling means comprise encoders directly connected to electric motors controlling the movement of an arm (17) of the robot (15) along the longitudinal axis (X), the first axis (Y) and the second axis (Z).

12. Welding process of metal strips along a feeding plane of said strips, defining a longitudinal axis (X), which can be carried out by means of a welding system according to any one of the preceding claim, comprising the following steps:
- positioning the tail of a first strip (11) at a first cutting position along said feeding plane by means of first positioning means (5', 4', 9);
- positioning the head of a second strip (10) at said first cutting position by means of second positioning means (5, 4, 8);
- cutting a tail portion of the first strip (11) and a head portion of the second strip (10) at said first cutting position by means of a laser head (16) of an operating machine (15);
- welding the tail of the first strip (11) and the head of the second strip (10) at said first cutting position by means of said laser head (16) in order to obtain a welded strip,
**characterised in** the following steps:
- feeding the welded strip so that the connection area (12) of said welded strip moves from said first cutting position (13) to a second cutting position (14) along said feeding plane;
- translating the laser head (16) along said longitudinal axis (X) from said first cutting position (13) to said second cutting position (14);
- side notching the welded strip at the ends of the connection area (12) by means of the laser head (16) in said second cutting position (14).

13. Welding process according to claim 12, wherein before carrying out the welding step there is provided a detection of the position of the horizontal symmetry plane, respectively, of the tail of the first strip (11) and of the head of the second strip (10) with respect to the feeding plane, and a detection of the position of the vertical symmetry plane, respectively, of the tail of the first strip (11) and of the head of the second strip (10), by means of detecting means.

14. Welding process according to claim 13, wherein before carrying out the welding step there is provided the moving of first and/or second clamping means (9, 8), respectively, of the tail of the first strip (11) and of the head of the second strip (10) by means of moving means controlled by said detecting means in order to translate said clamping means along a first axis (Y), orthogonal to the longitudinal axis (X) and lying on said feeding plane, to align the vertical symmetry planes of the first (11) and of the second strip (10) and/or in order to translate said clamping means along a second axis (Z), orthogonal to the longitudinal axis (X) and to the feeding plane, to align the horizontal symmetry planes of the first (11) and of the second strip (10) with said feeding plane.

15. Welding process according to claim 14, wherein before the welding step the first (9) and/or the second clamping means (8) are translated along the longitudinal axis (X) by means of said moving means, for suitably spacing the tail of the first strip (11) and the head of the second strip (10) according to predetermined welding parameters.

## Patentansprüche

1. Schweißsystem für Metallstreifen entlang einer Vorschubebene der Streifen, die eine Längsachse (X) definiert, umfassend:
- eine Arbeitsmaschine (15), die mit einem Laserkopf (16) versehen ist, welcher ausgestaltet ist, um in einer ersten Schneideposition (13) Schneidearbeitsgänge zum Schneiden eines hinteren Abschnitts eines ersten Streifens (11) und eines vorderen Abschnitts eines zweiten Streifens (10) sowie Schweißarbeitsgänge zum Verschweißen des hinteren Teils des ersten Streifens (11) und des vorderen Teils des zweiten Streifens (10) auszuführen, wodurch ein verschweißter Streifen erhalten wird,
- erste Positioniermittel (5', 4', 9), die ausgestaltet sind, um den hinteren Teil des ersten Streifens (11) an einer ersten Schneideposition entlang der Vorschubebene zu positionieren;
- zweite Positioniermittel (5, 4, 8), die ausgestaltet sind, um den vorderen Teil des zweiten Streifens (10) an der ersten Schneideposition zu positionieren,
**dadurch gekennzeichnet, dass**
die Arbeitsmaschine ein Roboter (15) ist, der ausgestaltet ist, um den Laserkopf (16) von der ersten Schneideposition in eine zweite Schneideposition (14) entlang der Längsachse (X) zu verschieben, um durch den Laserkopf (16) ein seitliches Einkerben an dem Verbindungsbereich (12) des verschweißten Streifens auszuführen, wenn der verschweißte Streifen die zweite Schneideposition erreicht.

2. Schweißsystem nach Anspruch 1,
wobei der Laserkopf (16) an einem Arm (17) des Roboters (15) montiert ist, in der Lage ist, sich entlang der Längsachse (X), entlang einer ersten Achse (Y), die senkrecht zu der Längsachse (X) steht und auf der Vorschubebene liegt, und entlang einer zweiten Achse (Z), die senkrecht zu der Längsachse (X) und zu der Vorschubebene steht, zu verschieben.

3. Schweißsystem nach Anspruch 2,
mit Detektionsmitteln zum Detektieren der Position der horizontalen Symmetrieebene jeweils des hinteren Teils des ersten Streifens (11) bzw. des vorderen Teils des zweiten Streifens (10) mit Bezug auf die Vorschubebene und zum Detektieren der Position der vertikalen Symmetrieebene jeweils des hinteren Teils des ersten Streifens (11) bzw. des vorderen Teils des zweiten Streifens (10).

4. Schweißsystem nach Anspruch 3,
wobei die ersten Positioniermittel (5', 4', 9) ein erstes Paar motorisierte Walzen (5'), erste Zentrierführungen (4') und erste Klemmmittel (9) des hinteren Teils des ersten Streifens (11) umfassen.

5. Schweißsystem nach Anspruch 4,
wobei die zweiten Positioniermittel (5, 4, 8) ein zweites Paar motorisierte Walzen (5), zweite Zentrierführungen (4) und zweite Klemmmittel (8) des vorderen Teils des zweiten Streifens (10) umfassen.

6. Schweißsystem nach Anspruch 5,
wobei Bewegungsmittel zum Bewegen der ersten und/oder zweiten Klemmmittel (9, 8) vorgesehen sind, von den Detektionsmitteln gesteuert sind und ausgebildet sind, um eine Verschiebung der Klemmmittel entlang der ersten Achse (Y) zuzulassen, um die vertikalen Symmetrieebenen des ersten (11) und des zweiten Streifens (10) auszurichten, und/ oder um eine Verschiebung der Klemmmittel entlang der zweiten Achse (Z) zuzulassen, um die horizontalen Symmetrieebenen des ersten (11) und des zweiten Streifens (10) mit der Vorschubebene auszurichten.

7. Schweißsystem nach Anspruch 6,
wobei die Bewegungsmittel die ersten (9) und/oder zweiten Klemmmittel (8) entlang der Längsachse (X) verschieben können, um den hinteren Teil des ersten Streifens (11) und den vorderen Teil des zweiten Streifens (10) mit Bezug auf vorbestimmte Schweißparameter geeignet zu beabstanden.

8. Schweißsystem nach einem der vorhergehenden Ansprüche,
wobei Schleifengeneratoren (6, 6') vorgesehen sind, um jeweils den ersten (11) und den zweiten Streifen (10) mit Bezug auf die Vorschubebene in dem Positionierungsschritt des vorderen Teils und des hinteren Teils der Streifen in der ersten Schneideposition anzuheben.

9. Schweißsystem nach einem der vorhergehenden Ansprüche,
wobei ein Paar Abflachungswalzen vorgesehen ist, die integral mit dem Laserkopf (16) bewegbar sind und die ausgebildet sind, um den Verbindungsbereich (12) des verschweißten Streifens zu ebnen.

10. Schweißsystem nach einem der vorhergehenden Ansprüche,
wobei Steuermittel zum Steuern der Bewegung des Laserkopfs (16) vorgesehen sind.

11. Schweißsystem nach Anspruch 10,
wobei die Steuermittel Kodierer umfassen, die direkt mit Elektromotoren verbunden sind, die die Bewegung eines Arms (17) des Roboters (15) entlang der Längsachse (X), der ersten Achse (Y) und der zweiten Achse (Z) steuern.

12. Schweißverfahren von Metallstreifen entlang einer Vorschubebene der Streifen, die eine Längsachse (X) definiert, welches mittels eines Schweißsystems nach einem der vorhergehenden Ansprüche ausgeführt werden kann, das die folgenden Schritte umfasst:
- Positionieren des hinteren Teils eines ersten Streifens (11) an einer ersten Schneideposition entlang der Vorschubebene mittels erster Positioniermittel (5', 4', 9);
- Positionieren des vorderen Teils eines zweiten Streifens (10) an der ersten Schneideposition mittels zweiter Positioniermittel (5, 4, 8);
- Schneiden eines hinteren Abschnitts des ersten Streifens (11) und eines vorderen Abschnitts des zweiten Streifens (10) an der ersten Schneideposition mittels eines Laserkopfes (16) einer Arbeitmaschine (15);
- Verschweißen des hinteren Teils des ersten Streifens (11) und des vorderen Teils des zweiten Streifens (10) an der ersten Schneideposition mittels des Laserkopfes (16), um einen verschweißten Streifen zu erhalten.
**gekennzeichnet durch** die folgenden Schritte:
- Vorschieben des verschweißten Streifens, so dass der Verbindungsbereich (12) des verschweißten Streifens sich von der ersten Schneideposition (13) zu einer zweiten Schneideposition (14) entlang der Vorschubebene bewegt;
- Verschieben des Laserkopfes (16) entlang der Längsachse (X) von der ersten Schneideposition (13) in die zweite Schneideposition (14);
- seitliches Einkerben des verschweißten Streifens an den Enden des Verbindungsbereichs (12) mittels des Laserkopfes (16) in der zweiten Schneideposition (14).

13. Schweißverfahren nach Anspruch 12,
wobei, bevor der Schweißschritt ausgeführt wird, eine Detektion der Position der horizontalen Symmetrieebene jeweils des hinteren Teils des ersten Streifens (11) bzw. des vorderen Teils des zweiten Streifens (10) mit Bezug auf die Vorschubebene und eine Detektion der Position der vertikalen Symmetrieebene jeweils des hinteren Teils des ersten Streifens (11) und des vorderen Teils des zweiten Streifens (10) mittels Detektionsmitteln vorgesehen wird.

14. Schweißverfahren nach Anspruch 13,
wobei, bevor der Schweißschritt ausgeführt wird, das Bewegen der ersten und/oder zweiten Klemmmittel (9, 8) jeweils des hinteren Teils des ersten Streifens (11) bzw. des vorderen Teils des zweiten Streifens (10) mittels Bewegungsmitteln vorgesehen wird, die von den Detektionsmitteln gesteuert werden, um die Klemmmittel entlang einer ersten Achse (Y), die senkrecht zu der Längsachse (X) steht und auf der Vorschubebene liegt, zu verschieben, um die vertikalen Symmetrieebenen des ersten (11) und des zweiten Streifens (10) auszurichten, und/ oder um die Klemmmittel entlang einer zweiten Achse (Z), die senkrecht zu der Längsachse (X) und der Vorschubebene steht, zu verschieben, um die horizontalen Symmetrieebenen des ersten (11) und des zweiten Streifens (10) mit der Vorschubebene auszurichten.

15. Schweißverfahren nach Anspruch 14,
wobei vor dem Schweißschritt die ersten (9) und/oder die zweiten Klemmmittel (8) entlang der Längsachse (X) mittels der Bewegungsmittel verschoben werden, um den hinteren Teil des ersten Streifens (11) und den vorderen Teil des zweiten Streifens (10) gemäß vorbestimmter Schweißparameter geeignet zu beabstanden.

## Revendications

1. Système de soudage de bandes métalliques le long d'un plan d'alimentation desdites bandes, définissant un axe longitudinal (X), comprenant :
- une machine (15) prévue avec une tête laser (16) configurée pour réaliser, lors d'une première position de coupe (13), à la fois des opérations de coupe pour couper une partie de queue d'une première bande (11) et une partie de tête d'une seconde bande (10), et des opérations de soudage pour souder la queue de la première bande (11) et la tête de la seconde bande (10), obtenant ainsi une bande soudée,
- des premiers moyens de positionnement (5', 4', 9) configurés pour positionner la queue de la première bande (11) dans une première position de coupe le long dudit plan d'alimentation ;
- des seconds moyens de positionnement (5, 4, 8) configurés pour positionner la tête de la seconde bande (10) dans ladite première position de coupe,
**caractérisé en ce que** ladite machine est un robot (15) configuré pour faire passer ladite tête laser (16) de ladite première position de coupe à une seconde position de coupe (14) le long dudit axe longitudinal (X), afin de réaliser un encochage latéral par ladite tête laser (16), au niveau de la zone de raccordement (12) de la bande soudée lorsque ladite bande soudée atteint ladite seconde position de coupe.

2. Système de soudage selon la revendication 1, dans lequel ladite tête laser (16) est montée sur un bras (17) dudit robot (15), capable d'effectuer un mouvement de translation le long de l'axe longitudinal (X), le long d'un premier axe (Y) orthogonal à l'axe longitudinal (X) et se trouvant sur ledit plan d'alimentation, et le long d'un second axe (Z) orthogonal par rapport à l'axe longitudinal (X) et au plan d'alimentation.

3. Système de soudage selon la revendication 2, dans lequel des moyens de détection permettent de détecter la position du plan de symétrie horizontal, respectivement de la queue de la première bande (11) et de la tête de la seconde bande (10) par rapport au plan d'alimentation, et permettent de détecter la position du plan de symétrie vertical, respectivement, de la queue de la première bande (11) et de la tête de la seconde bande (10).

4. Système de soudage selon la revendication 3, dans lequel lesdits premiers moyens de positionnement (5', 4', 9) comprennent une première paire de rouleaux motorisés (5'), des premiers guides de centrage (4') et des premiers moyens de serrage (9) de la queue de la première bande (11).

5. Système de soudage selon la revendication 4, dans lequel lesdits seconds moyens de positionnement (5, 4, 8) comprennent une seconde paire de rouleaux motorisés (5), des seconds guides de centrage (4) et des seconds moyens de serrage (8) de la tête de la seconde bande (10).

6. Système de soudage selon la revendication 5, dans lequel on prévoit des moyens de déplacement pour déplacer les premiers et seconds moyens de serrage (9, 8), commandés par lesdits moyens de détection et adaptés pour permettre une translation desdits moyens de serrage le long du premier axe (Y) afin d'aligner les plans de symétrie verticaux de la première (11) et de la seconde bande (10) et/ou pour permettre une translation desdits moyens de serrage le long du second axe (Z) pour aligner les plans de symétrie horizontaux de la première (11) et de la seconde bande (10) avec ledit plan d'alimentation.

7. Système de soudage selon la revendication 6, dans lequel lesdits moyens de déplacement peuvent faire effectuer un mouvement de translation aux premiers (9) et/ou seconds moyens de serrage (8) le long de l'axe longitudinal (X) pour espacer de manière appropriée la queue de la première bande (11) et la tête de la seconde bande (10) par rapport aux paramètres de soudage prédéterminés.

8. Système de soudage selon l'une quelconque des revendications précédentes, dans lequel des générateurs de boucle (6, 6') sont prévus pour faire monter respectivement la première (11) et la seconde bande (10) par rapport audit plan d'alimentation lors de l'étape de positionnement de ladite tête et de ladite queue des bandes dans la première position de coupe.

9. Système de soudage selon l'une quelconque des revendications précédentes, dans lequel on prévoit une paire de rouleaux aplatisseurs qui sont mobiles de manière solidaire avec la tête laser (16), adaptés pour stratifier la zone de raccordement (12) de la bande soudée.

10. Système de soudage selon l'une quelconque des revendications précédentes, dans lequel des moyens de commande pour commander le mouvement de la tête laser (16) sont prévus.

11. Système de soudage selon la revendication 10, dans lequel lesdits moyens de commande comprennent des encodeurs directement raccordés aux moteurs électriques commandant le mouvement d'un bras (17) du robot (15) le long de l'axe longitudinal (X), du premier axe (Y) et du second axe (Z).

12. Procédé de soudage de bandes métalliques le long d'un plan d'alimentation desdites bandes, définissant un axe longitudinal (X), qui peut être réalisé au moyen d'un système de soudage selon l'une quelconque des revendications précédentes, comprenant les étapes suivantes consistant à :
- positionner la queue d'une première bande (11) dans une première position de coupe le long dudit plan d'alimentation au moyen des premiers moyens de positionnement (5', 4', 9) ;
- positionner la tête d'une seconde bande (10) au niveau de ladite première position de coupe au moyen de seconds moyens de positionnement (5, 4, 8) ;
- couper une partie de queue de la première bande (11) et une partie de tête de la seconde bande (10) dans ladite première position de coupe au moyen d'une tête laser (16) d'une machine (15) ;
- souder la queue de la première bande (11) et la tête de la seconde bande (10) dans ladite première position de coupe au moyen de ladite tête laser (16) afin d'obtenir une bande soudée, **caractérisé par** les étapes suivantes consistant à :
- amener la bande soudée de sorte que la zone de raccordement (12) de ladite bande soudée passe de ladite première position de coupe (13) à une seconde position de coupe (14) le long dudit plan d'alimentation ;
- faire effectuer un mouvement de translation à la tête laser (16) le long dudit axe longitudinal (X) de ladite première position de coupe (13) à ladite seconde position de coupe (14) ;
- encocher latéralement la bande soudée aux extrémités de la zone de raccordement (12) au moyen de la tête laser (16) dans ladite seconde position de coupe (14).

13. Procédé de soudage selon la revendication 12, dans lequel avant de réaliser l'étape de soudage, on prévoit une détection de la position du plan de symétrie horizontal respectivement, de la queue de la première bande (11) et de la tête de la seconde bande (10) par rapport au plan d'alimentation, et une détection de la position du plan de symétrie vertical, respectivement de la queue de la première bande (11) et de la tête de la seconde bande (10), au moyen de moyens de détection.

14. Procédé de soudage selon la revendication 13, dans lequel, avant de réaliser l'étape de soudage, on prévoit le déplacement des premiers et/ou seconds moyens de serrage (9, 8), respectivement, de la queue de la première bande (11) et de la tête de la seconde bande (10) au moyen des moyens de déplacement commandés par lesdits moyens de détection afin de faire effectuer un mouvement de translation auxdits moyens de serrage le long d'un premier axe (Y), orthogonal à l'axe longitudinal (X) et se trouvant sur ledit plan d'alimentation, afin d'aligner les plans de symétrie verticaux de la première (11) et de la seconde bande (10) et/ou afin de faire effectuer un mouvement de translation auxdits moyens de serrage le long d'un second axe (Z) orthogonal par rapport à l'axe longitudinal (X) et au plan d'alimentation, afin d'aligner les plans de symétrie horizontaux de la première (11) et de la seconde bande (10) avec ledit plan d'alimentation.

15. Procédé de soudage selon la revendication 14, dans lequel avant l'étape de soudage, les premiers (9) et/ou les seconds moyens de serrage (8) effectuent un mouvement de translation le long de l'axe longitudinal (X) au moyen desdits moyens de déplacement, pour espacer de manière appropriée la queue de la première bande (11) et la tête de la seconde bande (10) selon les paramètres de soudage prédéterminés.
